# EUROPÄISCHE PATENTSCHRIFT

(11) **EP 0 877 166 B1**
(45) Veröffentlichungstag und Bekanntmachung des Hinweises auf die Patenterteilung: **23.06.2004**
(21) Anmeldenummer: 98107105.3
(22) Anmeldetag: 18.04.1998
(51) Int. Cl.: F04D 25/06, F04D 13/06

(54) **Nasssauger**
Wet suction apparatus
Aspirateur d'humidité

(30) Priorität: 05.05.1997 DE 19718981
(43) Veröffentlichungstag der Anmeldung: 11.11.1998
(73) Patentinhaber: PROAIR GmbH Gerätebau, 88260 Argenbühl-Eglofs (DE)
(72) Erfinder: Roth, Paul, 88316 Isny (DE)
(74) Vertreter: Jackisch-Kohl, Anna-Katharina

(56) Entgegenhaltungen:
- EP-A- 0 612 135
- EP-A- 0 719 939
- DE-A- 3 724 219
- DE-A- 3 802 890
- US-A- 4 836 147
- PATENT ABSTRACTS OF JAPAN vol. 007, no. 062 (E-164), 15. März 1983 & JP 57 208837 A (SHIBAURA SEISAKUSHO:KK), 22. Dezember 1982

## Beschreibung

Die Erfindung betrifft einen Naßsauger nach dem Oberbegriff des Anspruches 1.

In Naßsaugern werden häufig Elektromotoren eingesetzt, die mit einem Sauggebläse verbunden sind. Mit ihm wird das erforderliche Vakuum erzeugt, um die gewünschte Saugarbeit zu erledigen. Nachteilig bei solchen Geräten ist, daß die Saugluft durch den Motor geleitet wird und dabei Feuchtigkeit und feinste Staubpartikel den Motorinnenraum verschmutzen können, was zu Schädigungen am Motor führt. Außerdem sind in solchen elektrischen Geräten, die Wasser ausgesetzt sind, erhebliche Aufwendungen erforderlich, um den Zutritt von Feuchtigkeit zu den stromführenden beziehungsweise elektrischen/elektronischen Bauteilen zu verhindern beziehungsweise um die Richtlinien, die an die Gerätesicherheit gestellt werden, zu erfüllen.

Es ist auch eine Kühlpumpe bekannt (US-A-4,8336,147 A), die für einen Verbrennungsmotor vorgesehen ist. Sie weist eine Elektroraum mit einem Stator sowie einen Pumpenraum mit einem Rotor auf. Diese Räume sind durch eine wasserdichte Membrane voneinander getrennt.

Bei einer anderen bekannten Pumpe (DE 38 02 890 A) ist der Rotor in einem vom Stator über eine Zwischenwand getrennten Raum untergebracht.

Der Erfindung liegt die Aufgabe zugrunde, einen Naßsauger der eingangs genannten Art so auszubilden, daß auf konstruktiv einfache weise eine zuverlässige Trennung des zur Förderung der Medien vorgesehenen drehenden Bauteiles vom ruhenden Bauteil erreicht wird.

Diese Aufgabe wird bei einem Naßsauger der gattungbildenden Art erfindungsgemäß mit den kennzeichnenden Merkmalen des Anspruches 1 gelöst.

Infolge der erfindungsgemäßen Ausbildung sind der Rotor und der Stator räumlich voneinander getrennt, so daß sie nicht mehr ineinander greifen oder als Baugruppe zusammengefaßt sind. Durch die erfindungsgemäße räumliche Trennung ist der Rotor vollständig vom Stator abgetrennt, wodurch keine sonstigen Aufwendungen z.B. zur elektrischen Sicherheit durch Isolation oder zur Abdichtung gegen explosive Medien beziehungsweise die zum Einhalten gesetzlicher Vorschriften erforderlichen Vorkehrungen notwendig sind. So können beispielsweise die stromführenden beziehungsweise stromleitenden und den nichtstromführenden beziehungsweise nichtstromleitenden Bauteile in den durch die Unterteilung voneinander getrennten Räume einfach untergebracht werden.

Weitere Merkmale der Erfindung ergeben sich aus den weiteren Ansprüchen, der Beschreibung und den Zeichnungen.

Der Erfindung wird nachstehend anhand mehrerer in den Zeichnungen dargestellter Ausführungsbeispiele näher beschrieben. Es zeigt:
- Fig.1: in schematischer Darstellung eine als Elektromotor ausgebildete Antriebseinheit für einen erfindungsgemäßen Naßsauger,
- Fig.2: eine weitere Ausführungsform eines Elektromotors in schematischer Darstellung,
- Fig. 3: den Elektromotor gemäß Fig. 1, der in einem Gehäuseteil eines Gerätegehäuses untergebracht ist,
- Fig. 4: in schematischer Darstellung eine als Naßreinigungsgerät ausgebildete Fördereinrichtung mit einem Elektromotor,
- Fig. 5: in schematischer Darstellung eine als Staubsauger ausgebildete Fördereinrichtung mit einer weiteren Ausführungsform eines Elektromotors.
- Fig. 6: in schematischer Darstellung eine weitere Ausführungsform einer Antriebseinheit einer erfindungsgemäßen Fördereinrichtung,
- Fig. 7: in schematischer Darstellung eine als Pumpe ausgebildete erfindungsgemäße Fördereinrichtung,
- Fig. 8: in schematischer Darstellung eine weitere Ausführungsform einer als Pumpe ausgebildeten erfindungsgemäßen Fördereinrichtung,
- Fig. 9: im Axialschnitt eine als Naßsauger ausgebildete erfindungsgemäße Fördereinrichtung.

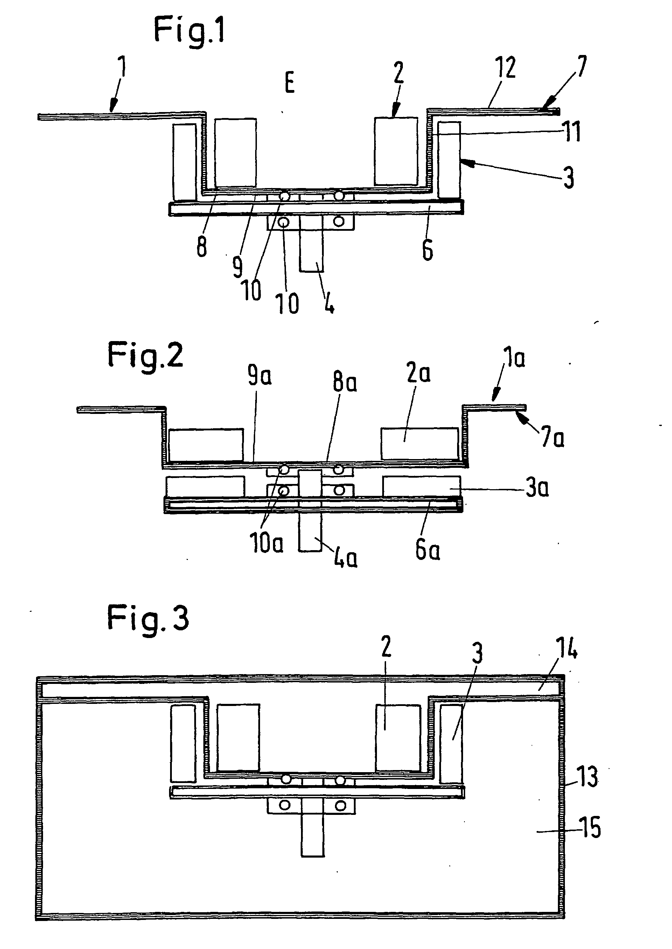

Fig. 1 zeigt einen Elektromotor 1 einer Fördereinrichtung, der einen Stator 2 aufweist, der in bekannter Weise aus einem (nicht dargestellten) Lamellenpaket mit Wicklung besteht. Der Stator 2 ist von einem als Außenläufer ausgebildeten Rotor 3 umgeben, der am Rand eines scheibenförmigen Trägers 6 befestigt ist. Er sitzt drehfest auf einer Antriebswelle 4, an die die Fördereinrichtung angeschlossen wird. Um den Stator 2, also die elektrische Seite E des Motors, vom Rotor 3 zu trennen, ist eine Trennwand 7 vorgesehen, die zwischen Stator 2 und Rotor 3 verläuft. Die Trennwand 7 umgibt den Stator 2 mit einem Napfteil 8, das mit seinem Boden 9 Abstand vom Träger 6 hat. Eine zylindrische Wand 11 des Napfteiles 8 liegt mit Abstand vom Stator 2 und mit vorzugsweise kleinerem Abstand vom Rotor 3 und geht mit Abstand oberhalb des Rotors 3 in einen zum Boden 9 parallel verlaufenden Wandteil 12 über, der den Rotor 3 gegen die elektrische Seite E abtrennt. Die Antriebswelle 4 ist mit zwei Kugellagern 10, die beiderseits des Trägers 6 liegen, drehbar abgestützt.

Die Trennwand 7 besteht aus einem elektrisch nicht leitenden Werkstoff, vorzugsweise Kunststoff. Durch die Trennwand 7 ist der Stator 2 vom Rotor 3 auf konstruktiv äußerst einfache Weise vollständig elektrisch isoliert, so daß die für herkömmliche Elektromotoren erforderlichen aufwendigen Isoliermaßnahmen und Maßnahmen zur Einhaltung gesetzlicher Vorschriften für elektrische Geräte entfallen können. Aufgrund der vollständigen Trennung der stromführenden Teile (Stator 2) von den nicht stromführenden Teilen (Rotor 3) ist auch ein hervorragender Schutz vor Zutritt von Flüssigkeit zum Stator 2 gewährleistet. Dadurch eignet sich der Motor 1 besonders zur Anwendung in Fördereinrichtungen, bei denen der Motor 1 mit Feuchtigkeit oder Flüssigkeit in Berührung kommen kann, wie Naßreinigungsgeräte. Im übrigen ist der Elektromotor 1 gleich ausgebildet wie herkömmliche Elektromotoren.

Fig. 2 zeigt einen Scheibenmotor 1a, bei dem der Stator 2a und der Rotor 3a in bezug auf die Antriebswelle 4a axial mit Abstand hintereinander angeordnet und als flache ringförmige Scheiben ausgebildet sind. Der Rotor 3a ist auf dem Träger 6a angeordnet, der drehfest auf der Antriebswelle 4a sitzt, die mit den Lagern 10a drehbar abgestützt ist. Sie sind im Bereich zwischen dem Träger 6a und dem Boden 9a der Trennwand 7a angeordnet, die gleich ausgebildet ist wie beim vorigen Ausführungsbeispiel. Der Rotor 3a ist vom Stator 2a wiederum durch die Trennwand 7a räumlich abgetrennt. Im Gegensatz zum vorigen Ausführungsbeispiel durchsetzt die Antriebswelle den Träger 6a. Entsprechend der Ausführungsform nach Fig. 1 kann der Stator 2a auf dem Boden 9a der Trennwand 7a befestigt sein. Der Stator 2a und der Rotor 3a sind durch den ebenen Boden 9a der Trennwand 7a voneinander getrennt. Wie bei der vorigen Ausführungsform liegt der Stator 2a innerhalb des Napfteiles 8a der Trennwand 7a.

Wie Fig. 3 zeigt, kann die Trennwand 7 beispielsweise mit einem Gehäuseteil 13 der Fördereinrichtung, wie eines Naßreinigungsgerätes oder eines Staubsaugers, einteilig oder einstückig ausgebildet sein. Dadurch kann der Stator 2 in einem in Fig. 3 oberhalb der Trennwand liegenden Gehäuseraum 14 und der Rotor 3 in einem darunterliegenden Raum 15 jeweils geschützt untergebracht sein. Durch die einteilige Ausbildung der Trennwand 7 mit dem Gehäuseteil 13 ist für die Trennwand 7 kein zusätzliches Gerätebauteil erforderlich, wodurch das Gewicht der Fördereinrichtung nicht nennenswert vergrößert wird. Die beschriebene Ausbildung der Trennwand im Gehäuseteil 13 gewährleistet eine absolute Sicherheit des Motors gegen Übersaugen bei Verwendung in Wassersaugern. Außerdem wird eine Verschmutzung der elektronischen Motorbauteile sicher vermieden.

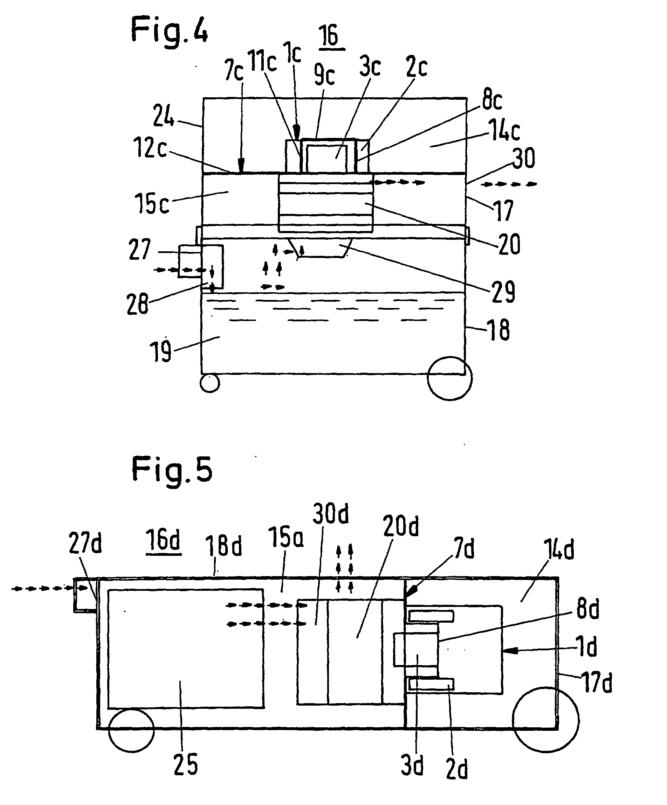

Die beschriebenen Elektromotoren können auch so ausgebildet sein, daß der Rotor ein Bauteil einer Pumpe oder eines Gebläses der Fördereinrichtung ist, in der der Motor angeordnet ist (Fig. 4, 5).

Fig. 4 zeigt in schematischer Darstellung als Fördereinrichtung einen Naßsauger 16 mit einem Gerätegehäuse 17, 18, in dem ein Wasserfilter 19, ein Gebläse 20, ein Stator 2c und ein Rotor 3c untergebracht sind. Das Wasserfilter 19 sind in einem Unterteil 18 des Gehäuses 17, 18 und das Gebläse 20, der Rotor 3c und der Stator 2c in einem Gehäuseoberteil 17 angeordnet. Der Gehäuseunterteil 18 hat eine Saugöffnung 27, an die ein (nicht dargestellter) Saugschlauch angeschlossen werden kann. An die Saugöffnung 27 schließt ein nach unten gerichteter Stutzen 28 an, durch den die angesaugte Schmutzluft in Richtung der Pfeile in das Wasserfilter 19 (Wasserbad) geleitet wird. Die Saugluft wird in bekannter Weise vom Gebläse 20 erzeugt. Im Wasser werden die Schmutzteilchen in der Schmutzluft zurückgehalten. Die Luft gelangt nach dem Durchtritt durch das Wasserfilter 19 in einen Abscheider 29, der am unteren Ende der (nicht dargestellten) Antriebswelle des Elektromotors drehfest sitzt. Im Abscheider 29 erfolgt in bekannter Weise durch Zentrifugalwirkung eine Trennung der in der Luft noch vorhandenen restlichen Schmutz/Staubteilchen und der Wassertropfen. Die so gereinigte Luft durchströmt das Gebläse 20 und tritt aus dem Naßsauger 16 aus. Wie die Strömungspfeile in Fig. 4 zeigen, tritt die Luft unterhalb der Trennwand 7c aus dem Gebläse 20 aus, bevor sie durch eine Auslaßöffnung 30 unterhalb der Trennwand 7c nach außen ins Freie tritt.

Der Rotor 3c des Elektromotors sitzt auf dem oberen Ende der Antriebswelle und ist im Gehäuseteil 8c untergebracht, der auf der Trennwand 7c vorgesehen ist. Der Gehäuseteil 8c ist vorteilhaft einstückig mit der Trennwand 7c ausgebildet, die den Gehäuseteil 17 in zwei voneinander getrennte Räume 14c und 15c unterteilt. Der Rotor 3c ist mit Abstand vom Stator 2c umgeben, der außerhalb des Gehäuseteiles 8c im Raum 14c angeordnet ist, in dem sich auch eine (nicht dargestellte) elektrische/elektronische Steuerung des Motors 1c befindet. Der Rotor 3c und der Stator 2c sind durch die Trennwand 7c räumlich voneinander getrennt. Die Trennwand 7c kann einteilig mit dem Gehäuseoberteil 17 aus nicht leitendem Material, vorzugsweise aus Kunststoff, ausgebildet sein, aber auch ein gesondertes Element sein, das am Gehäuseoberteil 17 in geeigneter Weise befestigt wird. Die Trennwand 7c schließt mit ihrem Rand 12c an die Seitenwandung 24 des Gehäuseoberteiles 17 an. Der napfförmige Gehäuseteil 8c umgibt den Rotor 3c mit Spiel und deckt ihn mit seinem Boden 9c gegen den Raum 14c ab. Der Stator 2c umgibt mit geringem Abstand die Wand 11c des Gehäuseteiles 8c. Im Raum 14c ist der stromführende Stator 2c untergebracht, der von den nicht stromführenden Teilen des Naßsaugers 16 vollständig getrennt ist. Die Trennwand 7c ist direkt durch den Elektromotor 1c geführt. Durch die räumliche Trennung des Rotors 3c und des Stators 2c über die Trennwand 7c wird in sehr einfacher Weise verhindert, daß Feuchtigkeit oder Flüssigkeit aus der vom Gebläse 20 angesaugten Luft zum stromführenden Stator 2c gelangt. Auch eine Verschmutzung des Motorinnenraumes und eine Beschädigung des Motors 1c wird zuverlässig ausgeschlossen.

Da die Trennwand 7c vorteilhaft Teil des Gerätegehäuses 17, 18 ist, kann auf einfache und kostengünstige Weise eine Isolation der nicht stromführenden Motorbauteile (Rotor 3c) von den ruhenden, stromführenden Motorbauteilen (Stator 2c) erreicht werden. Daher können die an herkömmliche Elektromotoren gestellten Sicherheitsvorschriften ohne weitere aufwendige Maßnahmen erfüllt werden.

Fig. 5 zeigt als Fördereinrichtung einen Staubsauger 16d, bei dem hinter der Saugöffnung 27d ein Staubbeutel 25 angeordnet ist. Die Saugluft wird vom Gebläse 20d erzeugt, das im Raum 15d des Gehäuses 17d, 18d untergebracht ist und den Rotor 3d aufweist. Die Staubluft wird axial vom Gebläse 20d angesaugt und radial nach außen durch die Auslaßöffnung 30d in der Wandung des Gehäuseteiles 18d geblasen. Der Raum 15d, in dem sich das Gebläse 20d und der Rotor 3d befinden, ist durch die Trennwand 7d vom Raum 14d getrennt. Die Trennwand 7d führt wie beim zuvor beschriebenen Ausführungsbeispiel durch den Motor 1d und ist vorteilhaft durch einen Gehäuseteil des Staubsaugergehäuses 17d, 18d gebildet. Der Rotor 3d ist im napfförmigen Gehäuseteil 8d der Trennwand 7d untergebracht. Der Stator 2d, der sich im Raum 14d befindet, umgibt den Gehäuseteil 8d mit Abstand. Die Achsen des Gebläses 20d, des Rotors 3d und des Stators 2d sind horizontal angeordnet, während sie beim vorigen Ausführungsbeispiel vertikal verlaufen.

Im Raum 14d, der von der Trennwand 7d und dem Gehäuseteil 17d begrenzt ist, liegt der Stator 2d vor Feuchtigkeit und Verschmutzung geschützt. Wie beim vorigen Ausführungsbeispiel ist die Trennwand 7d direkt durch den Motor 1d geführt. Wenn die Trennwand 7d Teil des Gehäuses 17d, 18d ist, sind für den Staubsauger 16d nur wenig Bauteile erforderlich. Er hat darum auch nur ein geringes Gewicht.

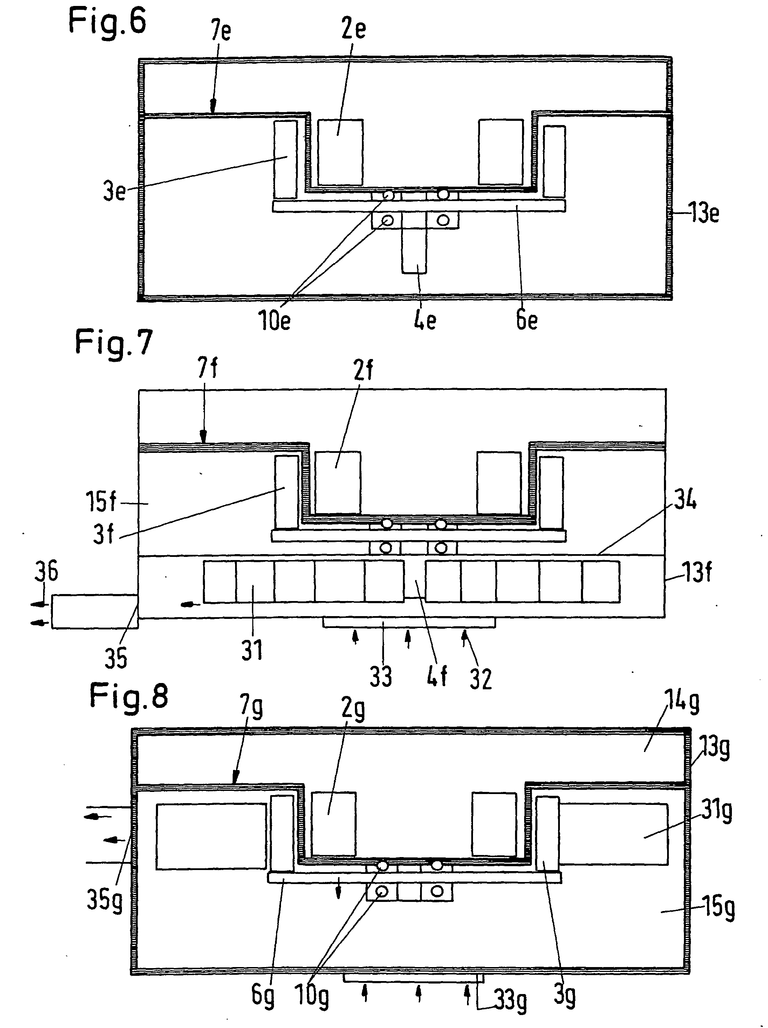

Fig. 6 zeigt einen Elektromotor für ein Fördergerät, wie eine Pumpe. Mit dieser Fördereinrichtung können flüssige Stoffe gefördert werden. Die Antriebswelle 4e dient als Anschluß für das Fördergerät, wie eine Behälterpumpe. Auf der Antriebswelle 4e sitzt drehfest der Träger 6e, der entsprechend den Ausführungsformen nach den Fig. 1 bis 3 scheibenförmig ausgebildet ist und sich senkrecht zur Antriebswelle 4e erstreckt. Auf dem Träger 6e sind am Umfang die drehenden Bauteile 3e befestigt, die mit Abstand gerätefeste elektrische Bauteile 2e umgeben. Die Bauteile 2e und 3e können wiederum ein Stator und ein Rotor des Elektromotors sein. Die elektrischen und die drehenden Bauteile 2e, 3e sind durch die Trennwand 7e voneinander getrennt, d.h. die Trennwand 7e geht zwischen den beiden Einheiten 2e und 3e hindurch. Dadurch sind die elektrischen Teile 2e des Motors von den rotierenden Teilen 3e getrennt. Dadurch wird die Gerätesicherheit mit geringstem Aufwand auf das Maximum erhöht und die Gefahr durch die elektrischen Bauteile 2e in höchstem Maß verringert.

Die Trennwand 7e ist gleich ausgebildet wie bei der Ausführungsform gemäß Fig. 3. Die Trennwand 7e ist mit dem Gehäuseteil 13e der Fördereinrichtung einteilig oder einstückig ausgebildet. Die Antriebswelle 4e ist mit den Lagern 10e drehbar abgestützt.

Die Fördereinrichtung kann bei der beschriebenen Bauart kraftschlüssig an den Elektromotor angeflanscht werden. Der rotierende Teil 3e kann auch ein Bauteil der Fördereinrichtung, wie eines Gebläses oder einer Pumpe, sein. Die Antriebseinheit kann hervorragend bei der Förderung von explosiven Stoffen eingesetzt werden. Die Trennwand 7e trennt die elektrischen Bauteile 2e absolut zuverlässig von den drehenden Bauteilen 3e, so daß eine eventuelle Funkenbildung im Bereich der elektrischen Bauteile 2e nicht zu einer Explosion der explosiven Stoffe führen kann, die sich im Bereich unterhalb der Trennwand 7e befinden. Die Trennwand 7e weist keinen Durchbruch auf, so daß Abdichtungsprobleme, wie sie bei herkömmlichen Fördereinrichtungen entstehen, vermieden sind. Dadurch ist die elektrische Sicherheit ohne Durchbruch der Trennwand 7e mit geringstem Aufwand gewährleistet. Insbesondere bei Wassersaugern, die Luft und Wasser fördern, gewährleistet diese Ausbildung eine hohe Sicherheit. Es wird ein optimaler Explosionsschutz erreicht, wobei die Fertigungskosten äußerst gering sind.

Fig. 7 zeigt eine weitere Ausführung einer Antriebseinheit für eine Fördereinrichtung, die im dargestellten Ausführungsbeispiel eine Pumpe ist. Auf der Antriebswelle 4f sitzt drehfest ein Pumpenrad 31, das das zu pumpende Medium in Richtung der Pfeile 32 über eine im Gehäuseteil 13f vorgesehene Einsaugöffnung 33 axial ansaugt. Das Pumpenrad 31 befindet sich unterhalb einer Zwischenwand 34, die den Gehäuseraum 15f unterhalb der Trennwand 7f unterteilt. Die Zwischenwand 34 wird von der Antriebswelle 4f durchsetzt. Das zu fördernde Medium wird vom Pumpenrad 31 radial nach außen durch eine Auslaßöffnung 35 des Gehäuseteiles 13f in Richtung der Pfeile 36 gefördert.

Oberhalb der Zwischenwand 34 befindet sich die Antriebseinheit in Form des Elektromotors, der gleich ausgebildet ist wie das Ausführungsbeispiel nach Fig. 6. Der Gehäuseteil 13f bildet das Pumpengehäuse, in welchem der Antriebsmotor mit den elektrischen Bauteilen 2f, der Trennwand 7f und den drehenden Bauteilen 3f untergebracht ist.

Beim Ausführungsbeispiel nach Fig. 8 sitzt das Pumpenrad auf dem Rotor 3g. Er umgibt den Stator 2g mit Abstand. Der Rotor 3g sitzt am Umfang des Trägers 6g, der mit den Lagern 10g drehbar im Pumpengehäuse 13g gelagert ist. Der Stator 2g ist vom Rotor 3g durch die Trennwand 7g vollständig getrennt, die gleich angeordnet ist wie beim vorigen Ausführungsbeispiel. Das Pumpengehäuse 13g hat die Einsaugöffnung 33g sowie die Auslaßöffnung 35g. Das Pumpengehäuse 13g ist durch die Trennwand 7g in die beiden Gehäuseräume 14g und 15g unterteilt, die durch die Trennwand 7g vollständig voneinander getrennt sind. Das Pumpenrad 31g mit dem Rotor 3g, der Träger 6g und die Lager 10g sind im Gehäuseraum 15g untergebracht. Im übrigen ist dieses Ausführungsbeispiel gleich ausgebildet wie die Ausführungsform nach Fig. 7.

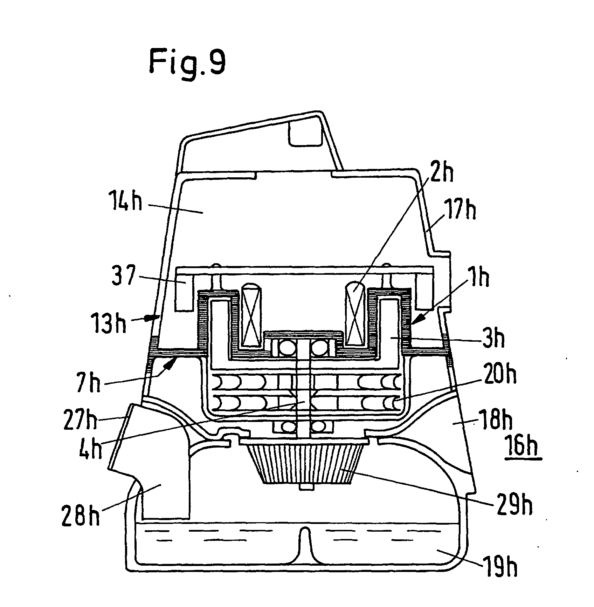

Fig. 9 zeigt als Fördereinrichtung einen Naßsauger 16h, der mit dem Gerätegehäuse 17h, 18h versehen ist. Im Gehäuseunterteil 18h befindet sich die Saugöffnung 27h, an die ein (nicht dargestellter) Saugschlauch angeschlossen wird. An die Saugöffnung 27h schließt ein nach innen gerichteter Stutzen 28h an, durch den die angesaugte Schmutzluft in ein (nicht dargestelltes) Wasserbad geleitet wird. Die Saugluft wird in bekannter Weise vom Gebläse 20h erzeugt. Im Wasserbad werden die Schmutzteilchen in der Schmutzluft zurückgehalten. Die gereinigte Luft gelangt nach dem Durchtritt durch das Wasserbad in das Gebläse 20h, das je nach Ausbildung des Naßsaugers 16h am unteren Ende mit einem Abscheider versehen sein kann. Das Gebläse sitzt drehfest auf der Antriebswelle 4h des Elektromotors 1h. Die gereinigte Luft durchströmt das Gebläse 20h und tritt aus dem Naßsauger 16h in bekannter Weise aus.

Der Elektromotor 1h hat den Stator 2h, der mit Abstand vom Rotor 3h umgeben ist. Der Stator 2h und der Rotor 3h sind durch die Trennwand 7h vollständig voneinander getrennt, welche sich durch den Elektromotor 1h so erstreckt, daß die elektrischen Teile 2h des Elektromotors von den rotierenden Bauteilen 3h, 20h getrennt sind. Die Querschnittsausbildung der Trennwand 7h ist an die konstruktive Ausbildung des Elektromotors 1h angepaßt. Im Gehäuseraum 14h befinden sich außer dem gehäusefesten Stator 2h noch weitere elektrische bzw. elektronische Bauteile, wie beispielsweise Kondensatoren 37. Dementsprechend ist die Trennwand 7h so geformt, daß auch diese weiteren elektrischen und/oder elektronischen Bauteile 37 von den drehenden Bauteilen 3h, 20h getrennt sind. Die aus dünnen Material bestehende Trennwand 7h läßt sich einfach formen, so daß sie optimal und mit geringstem Fertigungsaufwand so im Gerätegehäuse 13h untergebracht werden kann, daß die stromführenden Bauteile vollständig von den drehenden Bauteilen getrennt sind.

Bei sämtlichen Ausführungsformen ist die Trennwand 7, 7a, 7c, 7d bis 7h so geformt, daß der Stator 2, 2a, 2c, 2d bis 2h mit dem Rotor 3, 3a, 3c, 3d bis 3h zusammenwirken kann. Durch die beschriebene räumliche Trennung wird einwandfrei verhindert, daß die elektronischen Bauteile verschmutzen und/oder mit Feuchtigkeit in Berührung kommen. Der Motor 1, 1a, 1c, 1d, 1h ist ein elektronisch kommutierter Elektromotor, der die bei Kollektormotoren auftretenden Nachteile, wie Kohlestaub, Kriechströme und dgl., nicht aufweist. Er läuft infolge des fehlenden Kollektors äußerst geräuscharm, hat eine nur geringe Wärmeentwicklung und benötigt keine Wartung. Darüber hinaus zeichnet er sich durch eine stabile Drehzahl, ein hohes Drehmoment, einen guten Wirkungsgrad, durch eine hohe Rundlaufgenauigkeit und durch eine geringe Zahl von Bauteilen aus. Der kollektorlose Elektromotor 1, 1a, 1c, 1d, 1h ist verschleißfrei und hat nur geringes Gewicht. Dadurch kann bei der bevorzugten Verwendung des Elektromotors für einen Naßsauger die Wassermenge größer und damit die Reinigungsleistung um nahezu 50 % erhöht werden. Das geringe Gewicht erleichtert die Handhabung wesentlich. Da Schleifteile, wie die Kolhlebürsten eines Kollektormotors, nicht vorhanden sind, entsteht auch weniger Elektrosmog.

Anstelle der beschriebenen Elektromotoren kann als Antriebseinheit beispielsweise auch ein Magnetantrieb vorgesehen sein, bei dem die Kraftübertragung auf magnetische Weise erfolgt. Auch bei einer solchen Ausbildung einer Antriebseinheit wird der stationäre Teil vom drehenden Teil durch die Trennwand räumlich getrennt, die zwischen diesen beiden Baueinheiten hindurchgeht. Die Fördereinrichtungen können für flüssige oder für gasförmige Medien eingesetzt werden.

Die Trennwand kann in einfachster Weise unterschiedlich geformt werden, so daß die Formgebung der Trennwand an die jeweiligen Einbaugegebenheiten der Antriebe angepaßt werden kann.

## Patentansprüche

1. Naßsauger mit einem Flüssigkeitsbehälter (18, 18d) und mit einer Ansaugöffnung (27, 27d) für Schmutzluft, die durch eine im Flüssigkeitsbehälter (18, 18d) vorhandene Flüssigkeit (19, 19d) einem Separator (29, 29d) zuführbar ist, der auf eine Welle einer Antriebseinheit (1, 1a, 1c, 1d, 1h) sitzt und dem in Strömungsrichtung der Luft ein Gebläse (20, 20d) und eine Auslaßöffnung (30) nachgeschaltet sind, von denen die Antriebsein- . heit (1, 1a, 1c, 1d, 1h) für den Separator (29, 29d) und für das Gebläse (20, 20d) einen Stator (2, 2a, 2c bis 2h) und einen koaxial zum Stator liegenden Rotor (3, 3a, 3c bis 3h) aufweist, der drehfest auf der Welle der Antriebseinheit (1, 1a, 1c, 1d, 1h) sitzt,
**dadurch gekennzeichnet, daß** zwischen dem Stator (2, 2a, 2c bis 2h) und dem Rotor (3, 3a, 3c bis 3h) wenigstens eine Unterteilung (7, 7a, 7c bis 7h) verläuft, die aus elektrisch nicht leitendem Material besteht, daß die Unterteilung (7, 7a, 7c bis 7h) den den Stator (2, 2a, 2c bis 2h) aufnehmenden Raum (14, 14c, 14d, 14g, 14h) von dem den Rotor (3, 3a, 3c bis 3h) aufnehmenden Raum (15, 15c, 15d, 15f, 15g) trennt, daß die Unterteilung (7, 7a, 7c bis 7h) mit Abstand zum Separator (29, 29d) und zum Gebläse (20, 20d) verläuft, und daß der Separator (29, 29d), das Gebläse (20, 20d) und der Rotor (3, 3a, 3c bis 3h) in dem Raum (14c, 14d, 14g, 14h) untergebracht sind.

2. Naßsauger nach Anspruch 1,
**dadurch gekennzeichnet, daß** die Unterteilung (7, 7a, 7c bis 7d) die Antriebseinheit (1, 1a, 1c, 1d, 1h) durchsetzt.

3. Naßsauger nach Anspruch 1 oder 2,
dadurch gekenntzeichnet, daß die Unterteilung (7, 7a, 7c bis 7h) Teil eines Gerätegehäuses (17, 18; 17d, 18d, 17h, 18h) ist.

4. Naßsauger nach einem der Ansprüche 1 bis 3,
**dadurch gekennzeichnet, daß** die Unterteilung (7, 7a, 7c bis 7h) aus Kunststoff besteht.

5. Naßsauger nach einem der Ansprüche 1 bis 4,
**dadurch gekennzeichnet, daß** die Unterteilung (7, 7a, 7c bis 7h) einen napfförmigen Gehäuseteil (8, 8a, 8c, 8d) aufweist, in dem der Rotor (3, 3a, 3c bis 3h) oder der Stator (2, 2a, 2c bis 2h) untergebracht sind.

6. Naßsauger nach Anspruch 5,
**dadurch gekennzeichnet, daß** der Gehäuseteil (8, 8a, 8c, 8d) durch einen Teil der Unterteilung (7, 7a, 7c bis 7h) geformt ist.

## Claims

1. Wet suction apparatus with a liquid container (18, 18d) and with a suction opening (27, 27d) for dirty air, which can be conveyed to a separator (29, 29d) by a liquid (19, 19d), available within the liquid container (18, 18d), the separator (29, 29d) is fitted on a shaft of a drive unit (1, 1a, 1c, 1d, 1h) and after which a fan (20, 20d) and an outlet opening (30) are mounted in the direction of the air flow of which the drive unit (1, 1a, 1c, 1d, 1h) for the separator (29, 29d) and for the fan (20, 20d) comprises a stator (2, 2a, 2c to 2h) and a rotor (3, 3a, 3c to 3h), situated coaxially to the stator, the rotor being fitted rotation-fast on the shaft of the drive unit (1, 1a, 1c, 1d, 1h),
**characterized in that** between the stator (2, 2a, 2c to 2h) and the rotor (3, 3a, 3c to 3h) proceeds at least one partition member (7, 7a, 7c to 7h), consisting of electrically non-conducting material, that the partition member (7, 7a, 7c to 7h) separates the space (14, 14c, 14d, 14g, 14h), accommodating the stator (2, 2a, 2c to 2h) from the space (15, 15c, 15d, 15f, 15g), accommodating the rotor (3, 3a, 3c to 3h), that the partition member (7, 7a, 7c to 7h) proceeds with a distance to the separator (29, 29d) and to the fan (20, 20d) and that the separator (29, 29d), the fan (20, 20d) and the rotor (3, 3a, 3c to 3h) are placed in the space (14, 14c, 14d, 14g, 14h).

2. Wet suction apparatus according to claim 1,
**characterized in that** the partition member (7, 7a, 7c to 7d) extends through the drive unit (1, 1a, 1c, 1d, 1h).

3. Wet suction apparatus according to claim 1 or 2,
**characterized in that** the partition member (7, 7a, 7c to 7h) is a part of an apparatus housing (17, 18; 17d, 18d, 17h, 18h).

4. Wet suction apparatus according to claim 1 to 3,
**characterized in that** the partition member (7, 7a, 7c to 7h) consists of a plastic material.

5. Wet suction apparatus according to claim 1 to 4,
**characterized in that** the partition member (7, 7a, 7c to 7h) comprises a cup-shaped housing part (8, 8a, 8c, 8d) in which the rotor (3, 3a, 3c to 3h) or the stator (2, 2a, 2c to 2h) are accommodated.

6. Wet suction apparatus according to claim 5,
**characterized in that** the housing part (8, 8a, 8c, 8d) is formed by a part of the partition member (7, 7a, 7c to 7h).

## Revendications

1. Aspirateur d'humidité avec réservoir de liquide (18, 18d) et avec un orifice d'aspiration (27, 27d) pour air sale, qui peut être amené à un séparateur (29, 29d) au moyen d'un liquide (19, 19d) se trouvant dans le réservoir (18, 18d), ce séparateur (29, 29d) étant placé sur un arbre d'une unité d'entraînement (1, 1a, 1c, 1d, 1h) et dans le sens de mouvement de l'air et en aval de ce séparateur se trouvent une soufflante (20, 20d) et un orifice d'échappement (30) dont l'unité d'entraînement (1, 1a, 1c, 1d, 1h) pour le séparateur (29, 29d) et pour la soufflante (20, 20d) comprend un stator (2, 2a, 2c à 2h) et, situé coaxiallement au stator, un rotor (3, 3a, 3c à 3h) relié de façon solidaire à ledit arbre de l'unité d'entraînement (1, 1a, 1c, 1d, 1h),
**caractérisé en ce que** se trouve entre le stator (2, 2a, 2c à 2h) et le rotor (3, 3a, 3c à 3h) au moins un sectionnement (7, 7a, 7c à 7h), constitué de matériel électriquement non conducteur, et que ledit sectionnement (7, 7a, 7c à 7h) sépare l'espace (14, 14c, 14d, 14h) contenant le stator (2, 2a, 2c à 2h) de l'espace (15, 15c, 15d, 15f, 15g) contenant le rotor (3, 3a, 3c à 3h), et que ledit sectionnement (7, 7a, 7c à 7h) est placé à une certaine distance du séparateur (29, 29d) et de la soufflante (20, 20d), et que le séparateur (29, 29d), la soufflante (20, 20d) et le rotor (3, 3a, 3c à 3h) sont aménagés dans cet espace (14, 14c, 14d, 14g, 14h).

2. Aspirateur d'humidité selon revendication 1,
**caractérisé en ce que** ledit sectionnement (7, 7a, 7c à 7d) est entrecoupé par l'unité d'entraînement (1, 1a, 1c, 1d, 1h).

3. Aspirateur d'humidité selon revendication 1 ou 2,
**caractérisé en ce que** ledit sectionnement (7, 7a, 7c à 7h) est part d'une boîte d'instruments (17, 18; 17d, 18d, 17h, 18h).

4. Aspirateur d'humidité selon revendication 1 à 3,
**caractérisé en ce que** ledit sectionnement (7, 7a, 7c à 7h) consiste de matière plastic.

5. Aspirateur d'humidité selon revendication 1 à 4,
**caractérisé en ce que** ledit sectionnement (7, 7a, 7c à 7h) comprend une pièce de boîtier (8, 8a, 8c, 8d) en forme d'écuelle, dans laquelle sont aménagés le rotor (3, 3a, 3c à 3h) et le stator (2, 2a, 2c à 2h).

6. Aspirateur d'humidité selon revendication 5,
**caractérisé en ce que** ladite pièce de boîtier (8, 8a, 8c, 8d) fait partie dudit sectionnement (7, 7a, 7c à 7h).
